# EUROPEAN PATENT SPECIFICATION

(11) **EP 2 190 724 B1**
(45) Date of publication and mention of the grant of the patent: **09.11.2011**
(21) Application number: 09787908.4
(22) Date of filing: 30.07.2009
(51) Int. Cl.: B62J 35/00, B62J 23/00

(54) **SCOOTER TYPE VEHICLE**
MOTORROLLERARTIGES FAHRZEUG
VÉHICULE DE TYPE SCOOTER

(30) Priority: 01.08.2008 JP 2008200111; 19.02.2009 JP 2009036396
(43) Date of publication of application: 02.06.2010
(73) Proprietor: Yamaha Hatsudoki Kabushiki Kaisha, Iwata-shi, Shizuoka 438-8501 (JP)
(72) Inventor: WANG, Hsing-yang, Iwata-shi Shizuoka 438-8501 (JP); OOHIRA, Masaru, Iwata-shi Shizuoka 438-8501 (JP); MOCHIZUKI, Kan, Iwata-shi Shizuoka 438-8501 (JP)
(74) Representative: Zimmermann, Tankred Klaus
(86) International application number: PCT/JP2009/003625
(87) International publication number: WO 2010/013481

(56) References cited:
- EP-A- 0 849 149
- EP-A- 1 138 583
- EP-A- 1 245 481
- EP-A- 1 520 774
- FR-A- 2 828 865
- US-A- 4 800 980
- US-A- 5 433 286
- US-A1- 2002 166 709
- US-A1- 2006 113 747

## Description

### Technical Field

The present invention relates to a scooter type vehicle.

### Background Art

A conventional scooter type vehicle is disclosed, for example, in Patent Literature 1 which is considered as the closest prior art. The scooter type vehicle is provided with a low-floor footboard between a steering bar for steering a front wheel and a seat that a rider straddles.

The vehicle body frame of this scooter type vehicle is provided with a head pipe, a front frame, and left and right side frames. The front frame extends downward from the head pipe and curves backward. The left and right side frames extend rearward of the vehicle from a lower part of the front frame.

Additionally, a fuel tank is disposed between the left and right side frames, while it is disposed below the footboard. Moreover, a plurality of protruding members are disposed below the fuel tank. The protruding members are made of rigid material, and lower ends thereof protrude further downward than the fuel tank. The protruding members are fixed to the vehicle body frame.

### Citation List

### Patent Literature

PTL 1: Japanese Laid-open Patent Application No. H05-65088 (=JP so 65088).

### Summary of Invention

### Technical Problem

In the conventional scooter type vehicle, the protruding member is disposed to be matched with a line D, indicating a bump on the road, as illustrated in FIG. 3 of the Patent Literature 1. The bottom surface of the fuel tank is disposed above the line D indicating a bump on the road. As illustrated with the line D, the bump on the road, assumed in the Patent Literature 1, is a mountainous bump.

According to the scooter type vehicle of the Patent Literature 1, vertical distance is sufficiently ensured between the road and the protruding member or the fuel tank for preventing the fuel tank from making contact with the road even if a bump is formed on the road.

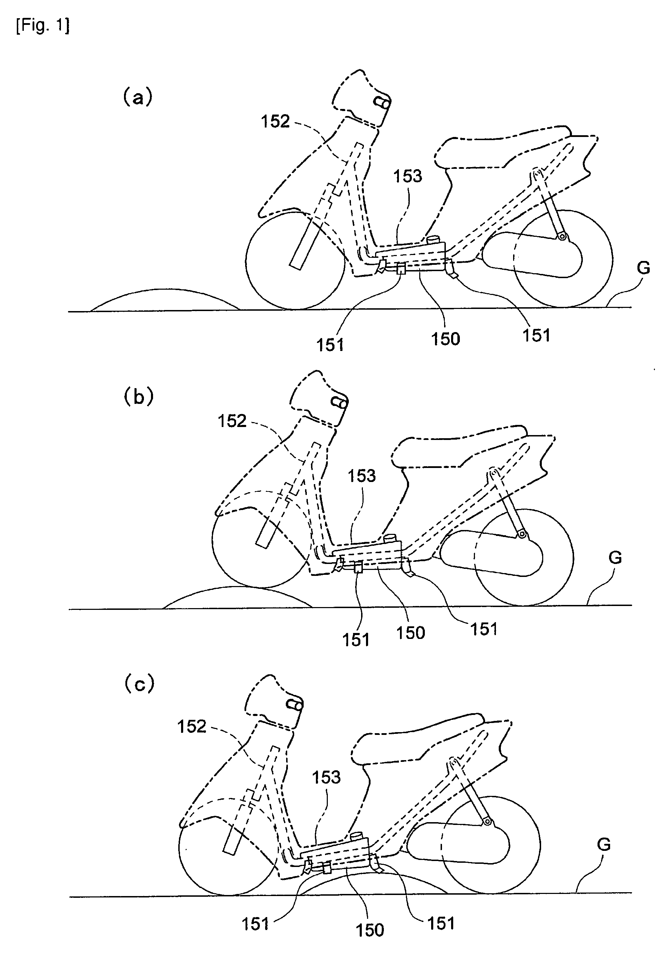

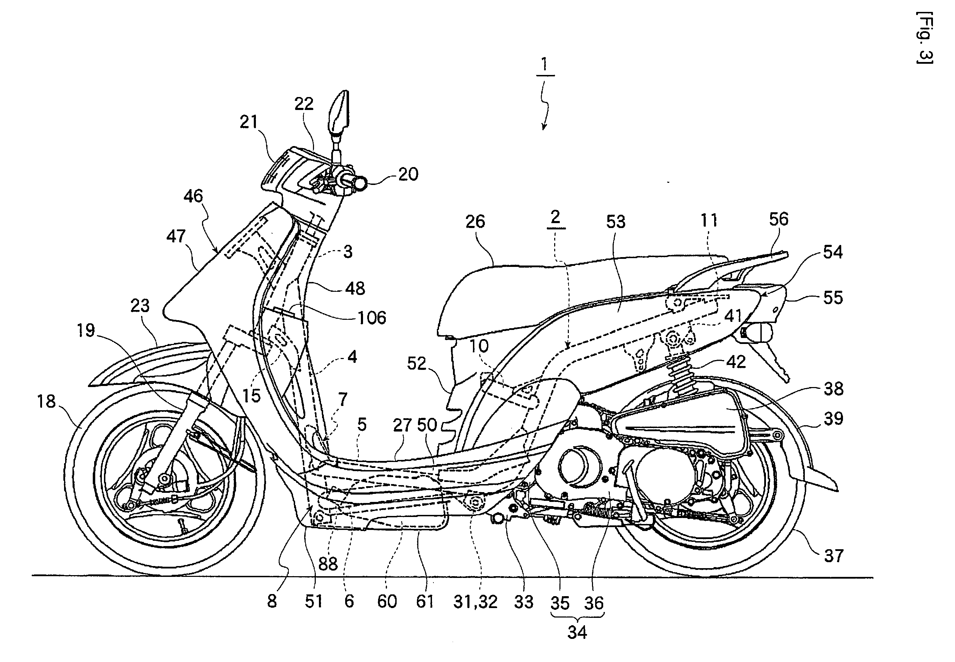

FIGS. 1(a) through 1(c) illustrate a behavior of the scooter type vehicle of the Patent Literature 1 in crossing over a bump on the road. As illustrated in FIG. 1, the scooter type vehicle of the Patent Literature 1 is configured to protect a fuel tank 150 by preventing the fuel tank 150 from making contact with a road G. Additionally, as is obvious from FIG. 3 of the Patent Literature 1, even if the vehicle makes contact with the road, a high-rigidity protruding member 151 (see FIG. 1), provided in a vehicle body frame 152, makes contact with the road. The fuel tank 150 is thus protected.

However, the scooter type vehicle of the Patent Literature 1 has a drawback that it is difficult to enlarge the capacity of the fuel tank, because vertical distance between the road and the fuel tank is sufficiently ensured.

It is an object of the present invention to provide a scooter type vehicle that a fuel tank can be protected even if the capacity of the fuel tank is increased.

### Solution to Problem

First, to enlarge the capacity of the fuel tank of the scooter type vehicle described in the Patent Literature 1, inventors of the present application assumed a type of a fuel tank enlarged downward in the vertical direction of the vehicle.

However, the inventors found the following fact. As is obvious with reference to FIG. 1, sufficient distance cannot be ensured between the road G and the fuel tank 150 when the fuel tank 150 is extended downward. Accordingly, the protruding member 151 has growing probabilities of making contact with the road G. The protruding member 151 is provided in the vehicle body frame 152. In addition, the protruding member 151 has high rigidity. Therefore, every time the protruding member 151 makes contact with the road G, large external force is applied to the vehicle body frame 152. The vehicle is thereby vibrated. Consequently, the capacity of the fuel tank 150 can be increased and the fuel tank 150 can be protected. However, comfortableness of a rider of the vehicle is simultaneously deteriorated.

Next, the inventors assumed a type of the fuel tank 150 extended upward in the vertical direction. However, the fuel tank 150 is disposed below the footboard 153. When the fuel tank 150 is extended upward, height of the footboard 153 is accordingly raised. As a result, the capacity of the fuel tank 150 can be increased and the fuel tank 150 can be protected. However, comfortableness of a rider of the vehicle is simultaneously deteriorated.

The inventors of the present application continued to devote themselves to study how the aforementioned three effects are balanced in a higher dimension. Finally, the inventors noticed that a front part of the fuel tank tends to make contact with the road when the fuel tank is extended downward in the vertical direction. The front part of the fuel tank is, in other words, a part of the fuel tank disposed close to a front wheel. Therefore, the inventors of the present invention decided to be tolerant of growing probabilities of contact between the vehicle and the road. Instead of this, the inventors hit upon an idea that the aforementioned three effects are balanced in a higher dimension by inhibiting vibration of the vehicle caused when the vehicle makes contact with the road.

In view of the above, a scooter type vehicle according to the present invention includes a handle and a vehicle body frame. The vehicle body frame includes a head pipe, a front frame and a side frame. The head pipe supports the handle for allowing it to rotate. The front frame at least extends downward from the head pipe. The side frame includes a part extending rearward from a lower part of the front frame and a part extending in an upwardly rearward direction. The scooter type vehicle further includes a seat, a footboard, a fuel tank and a tank guard. The seat is disposed above the side frame and rearward of the handle. The footboard is disposed above the side frame and allows a rider straddling the seat to put his/her feet. The fuel tank is disposed below the footboard. The tank guard is disposed below a part of the fuel tank.

Additionally, a lower part of the front frame is disposed forward of a main body part of the fuel tank. The tank guard is partially disposed forward of the fuel tank and below at least a part of a lower end part of the front frame. The front frame and the tank guard compose a shock-absorbing mechanism for absorbing the external force acting on the vehicle body frame.

### Advantageous Effects of Invention

According to the present invention, the lower part of the front frame is disposed forward of the main body part of the fuel tank, and the tank guard is partially disposed forward of the main body part of the fuel tank and below at least a part of the lower end part of the front frame. Moreover, the front frame and the tank guard compose the shock-absorbing mechanism for absorbing the external force acting on the vehicle body frame. With the structure, the tank guard firstly makes contact with a bump on the road (e.g., a speed bump). When the external force is applied to the tank guard at this time, the shock-absorbing mechanism absorbs the external force to some extent. Accordingly, the external force, to be transferred to the front frame, is reduced and vibration of the vehicle is inhibited. Even if the external force is large, the external force is partially absorbed by the shock-absorbing mechanism. Then, the rest of the external force, remaining without being absorbed by the shock-absorbing mechanism, is transferred to the front frame. However, the shock-absorbing mechanism absorbs the large amount of the external force, and vibration of the vehicle is thereby greatly inhibited. Obviously, the fuel tank can be protected. As a result, the capacity of the fuel tank is allowed to be increased while the fuel tank can be protected. Moreover, vibration of the vehicle is inhibited, and reduction in comfortableness of a rider of the vehicle can be inhibited.

According to the present invention, the fuel tank is enlarged downward. Therefore, the fuel tank is not required to be enlarged upward. In other words, height of the footboard is not required to be increased. As a result, reduction in comfortableness of a rider of the vehicle can be inhibited.

### Brief Description of Drawings

[fig.1]FIG. 1 illustrates a behavior of a conventional scooter type vehicle in crossing over a bump on the road.
[fig.2]FIG. 2 illustrates a behavior of a scooter type vehicle of the present invention in crossing over a speed bump on the road.
[fig.3]FIG. 3 is a left side view of the scooter type vehicle according to an embodiment of the present invention.
[fig.4]FIG. 4 is a left side view of a vehicle body frame assembly of the scooter type vehicle.
[fig.5]FIG. 5 is a plan view of the vehicle body frame assembly of the scooter type vehicle.
[fig.6]FIG. 6 is a front view of the vehicle body frame assembly seen along an arrow IV in FIG. 4.
[fig.7]FIG. 7 is a left side view illustrating a fuel tank and a tank guard attached to the vehicle body frame.
[fig.8]FIG. 8 is a plan view of the fuel tank and the tank guard seen along an arrow VI in FIG. 7.
[fig.9]FIG. 9 is a left side view of the fuel tank assembly.
[fig.10]FIG. 10 is a plan view of the fuel tank assembly.
[fig.11]FIG. 11 is a left side view of the tank guard assembly.
[fig.l2]FIG. 12 is a plan view of the tank guard assembly.
[fig.13]FIG. 13 is a longitudinal cross-sectional view of the tank guard assembly along a line XIII-XIII in FIG. 11.
[fig.14]FIG. 14 is a longitudinal cross-sectional view of the fuel tank and the tank guard along a line XIV-XIV in FIG. 8.
[fig.15]FIG. 15 is a longitudinal cross-sectional view of the fuel tank and the tank guard along a line XV-XV in FIG. 8.
[fig.16]FIG. 16 is a longitudinal cross-sectional view of the fuel tank and the tank guard along a line XVI-XVI in FIG. 8.
[fig.17]FIG. 17 is a longitudinal cross-sectional view of the fuel tank and the tank guard along a line XVII-XVII in FIG. 7.

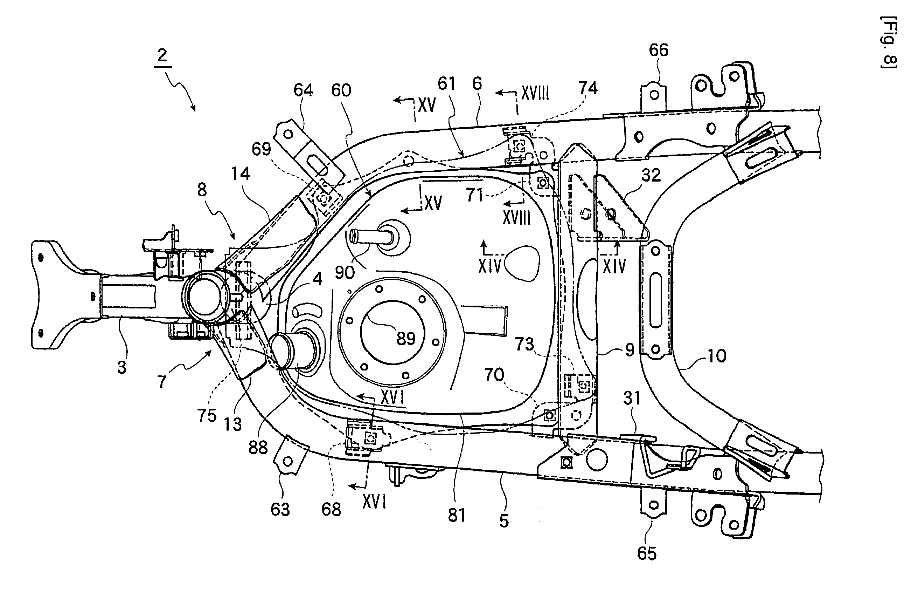

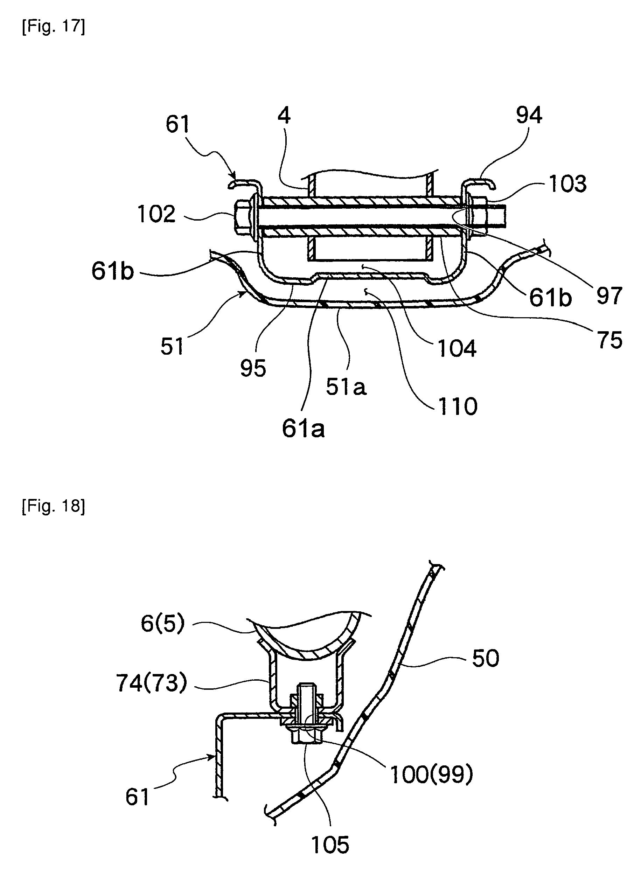

[fig.8]FIG. 18 is a longitudinal cross-sectional view of the fuel tank and the tank guard along a line XVI1I-XVIII in FIG. 8.

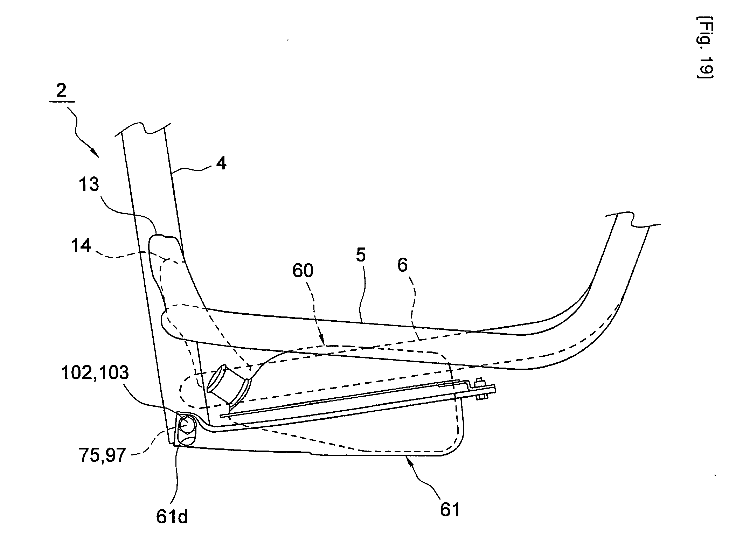

[fig.19]FIG. 19 illustrates a shock-absorbing mechanism according to another embodiment.

### Description of Embodiments

The inventors of the present application found that the bottom of a vehicle easily makes contact with a speed bump when the vehicle passes through the speed bump at the speed of 15 kilometers per hour or greater, as a result of their research.

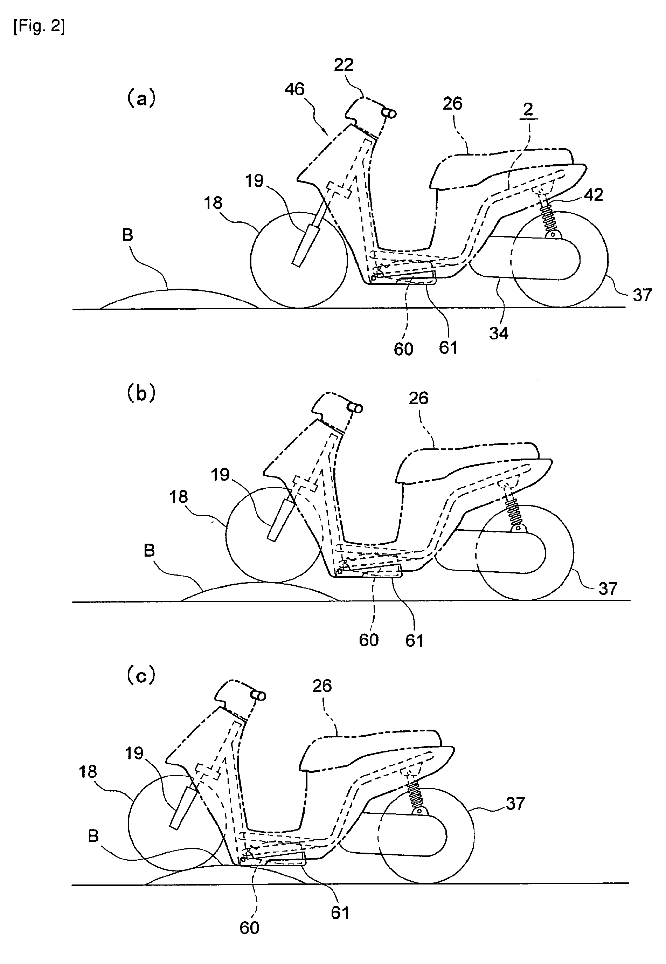

A behavior of a scooter type vehicle of the present invention in crossing over a speed bump will be hereinafter explained with reference to FIG. 2. The bump is herein assumed as a type of bump provided on the road, having the longitudinal length of roughly 1 meter and the vertical length of roughly 10 centimeters.

FIGS. 2(a) through 2(c) illustrate positional relations among the road, a fuel tank and a tank guard extended downward, both of which are provided in the scooter type vehicle of the present invention, when the scooter type vehicle crosses over a speed bump. Numerals given to the components of the scooter type vehicle are the same as those used in the following explanation.

FIG. 2(a) illustrates a condition that a scooter type vehicle 1 of the present invention has not reached a speed bump B yet.

FIG. 2(b) illustrates a condition that the scooter type vehicle 1 of the present invention has reached the speed bump B but has not reached the top of the speed bump B. In the condition, a front fork 19 is compressed by the external force from the road. In the condition, the scooter type vehicle 1 is further inclined in an upwardly forward direction than the condition illustrated in FIG. 2(a).

FIG. 2(c) illustrates a condition that the scooter type vehicle 1 of the present invention has crossed over the top of the speed bump B. In the condition, the amount of compression of the front fork 19 due to the external force from the road is smaller than the condition illustrated in FIG. 2(b). In the condition, the scooter type vehicle 1 is further inclined in an upwardly forward direction than the condition illustrated in FIG. 2(a). In the condition, however, the amount of inclination of the scooter type vehicle with respect to a horizontal plane is smaller than the condition illustrated in FIG. 2(b). In FIG. 2(c), a front part of a tank guard 61, especially a part of the tank guard 61 roughly positioned below a front frame 4, is positioned close to the speed bump B.

Based on the above, it is understandable that the front part of the tank guard 61 and a component disposed lower than the front frame 4 have high probabilities of making contact with the speed bump B when the scooter type vehicle crosses over the speed bump B.

### <Overall Structure>

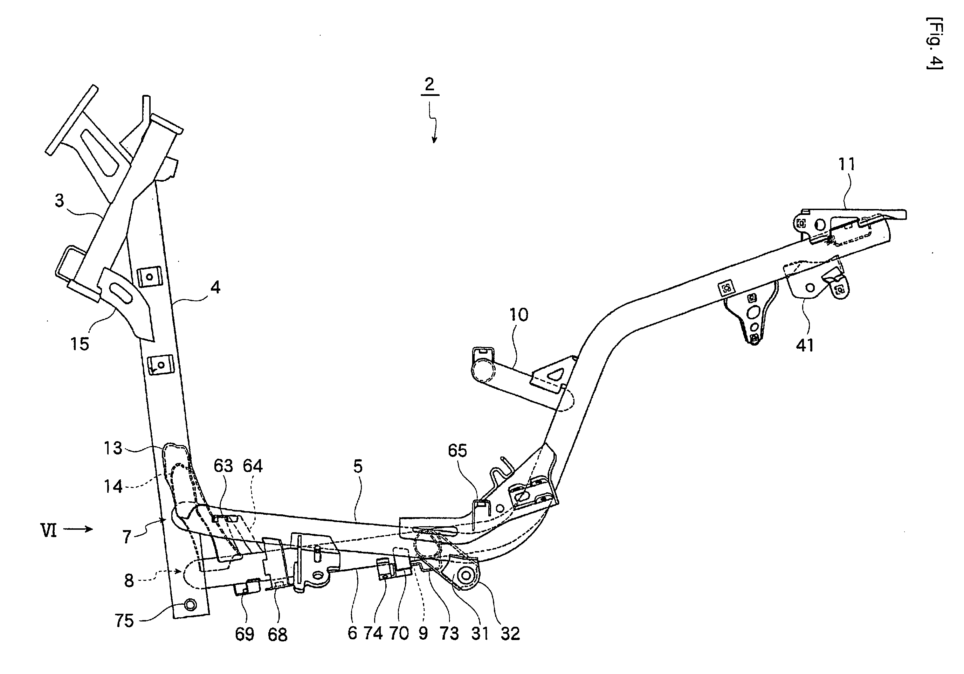

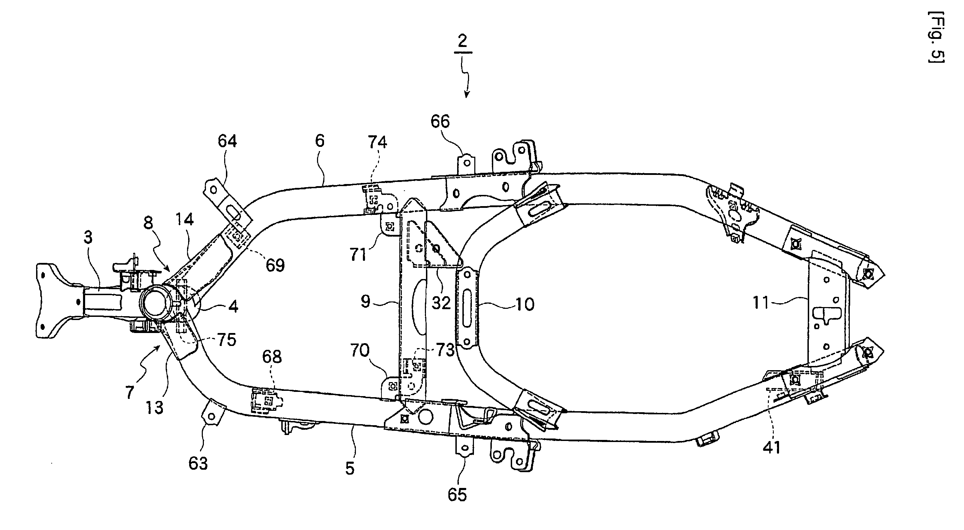

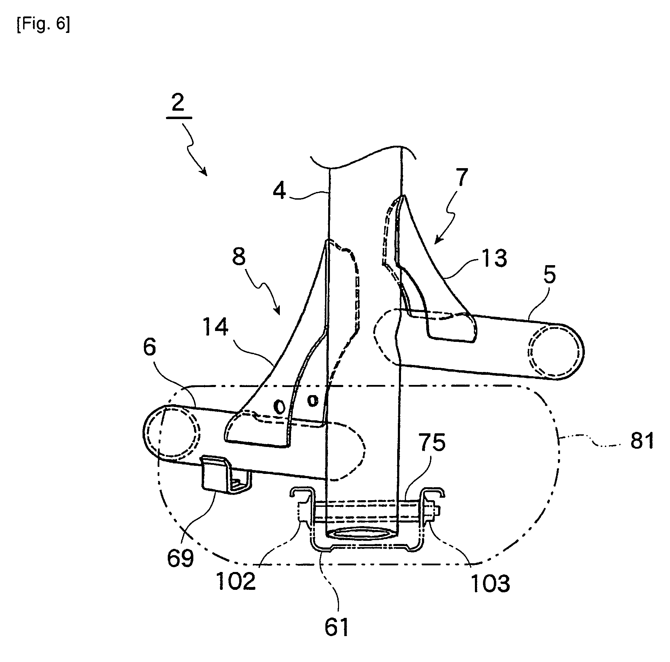

FIG. 3 is a left side view of a scooter type vehicle according to a first embodiment of the present invention. FIG. 4 is a left side view of a vehicle body frame assembly of the scooter type vehicle. FIG. 5 is a plan view of the same vehicle body frame. FIG. 6 is a front view of the vehicle body frame seen along an arrow VI in FIG. 4.

The vehicle body frame 2 of the scooter type vehicle 1 has a head pipe 3, a front frame 4, and left and right side frames 5, 6. The head pipe 3 is positioned at the front part of the vehicle body frame 2. The dead pipe 3 is formed into a rectilinear shape extending in the vertical direction. The head pipe 3 is inclined so that the bottom side thereof is disposed in a further forward position than the top side thereof. The front frame 4 is formed into a rectilinear shape extending in the vertical direction. The front frame 4 is inclined so that the bottom side is disposed in a further rearward position then the top side thereof. In a side view, the front frame 4 is inclined in the opposite direction to the head pipe 3. The top end of the front frame 4 is joined to the head pipe 3. The left and right side frames 5, 6 extend rearward from a lower part of the front frame 4, and then extend in an upwardly rearward direction. More specifically, the front end of the left side frame 5 is joined to the lower part of the front frame 4, and extends from the joining part (i.e., a left joining part 7) in a left-rearward direction. The left joining part 7 includes a reinforcing member 13 and the connection part between the left side frame 5 and the front frame 4. On the other hand, the front end of the right side frame 6 is joined to an approximately lower end of the front frame 4, and extends from the joining part (i.e., a right joining part 8) in a right-rearward direction of the vehicle body. The right joining part 8 includes a reinforcing member 14 and the connection part between the right side frame 6 and the front frame 4. Additionally, the left and right side frames 5, 6 are coupled by coupling frames 9, 10, 11. The coupling frames 9, 10, 11 extend in the transverse direction of the vehicle..

As is evident in FIG. 6, the left and right side frames 5, 6 are joined at substantially right angles respectively to the left and right side surfaces of the approximately lower end of the front frame 4 in a front view of the vehicle body. The left side frame 5 is joined to the front frame 4 in a higher position than the right side frame 6. Additionally, the front part of the left side frame 5 extends in an downwardly rearward direction in a side view of the vehicle body (see FIG. 4). The vertical relation between the left and right side frames 5, 6 is not limited to the one described in this embodiment.

In the present embodiment of the invention, the term "side frame" indicates both of the left side frame 5 and the right side frame 6.

The joining part between the head pipe 3 and the front frame 4 is provided with a reinforcing member 15.

The reinforcing members 13, 14 are joined to the front frame 4 and the top surfaces of the left and right side frames 5, 6, as illustrated in FIGS. 4 through 6.

As described above, the left side frame 5 inclines downward as it extends away from the front frame 4, whereas the right side frame 6 inclines upward as it extends away from the front frame 4. It is thereby possible to reduce a height difference between outermost portions of the left and right side frames 5, 6 in the transverse direction of the vehicle. Additionally, height of the right side frame 6 is lower than that of the left side frame 5. It is thereby possible to prevent the right bank angle of the vehicle body from being reduced.

As illustrated in FIG. 3, a front fork 19 for supporting a front wheel 18 is pivotally supported by the head pipe 3, and is accordingly allowed to be steered. A handle 20 for steering the front wheel 18 is provided at the upper end of the front fork 19. A front fender 23 for covering an upper part of the front wheel 18 is fixed to the front fork 19. A headlight 21 and a meter panel 22 are disposed in the vicinity of the handle 20.

On the other hand, a seat 26 that a rider straddles is positioned above the side frames 5, 6 curved to extend in an upwardly rearward direction of the vehicle body. A footboard 27 is disposed between the seat 26 and the handle 20 (head pipe 3). The footboard 27 is a member on which a rider, straddling the seat, puts his/her feet.

Left and right engine brackets 31, 32 are fixed to the coupling frame 9 positioned in the center bottom of the vehicle body frame 2. A power unit 34 is supported by the engine brackets 31, 32 via a link member 33. The power unit 34 is linked to the vehicle body frame 2 in a vertically swingable manner. The power unit 34 is a common model for scooter type vehicles that a belt transmission device 36 is integrally provided to the rear of an engine 35. A rear wheel 37 is rotatably supported behind the belt transmission device 36, and an air cleaner 38 is positioned above the belt transmission device 36. Furthermore, a rear fender 39 is provided above the rear wheel 37.

Furthermore, as is evident from FIG. 4 and other figures, a bracket 41 is fixed to the rear part of the left side frame 5, and a rear suspension 42 is coupled between the rear part of the belt transmission device 36 and the bracket 41.

The vehicle body frame 2 is covered with a vehicle body cover 46 made of synthetic resin. The vehicle body cover 46 is composed of a plurality of cover members including, e.g., a front cover 47, a leg shield cover 48, a side cover 50, an under cover 51, a rear cover 52, a rear side cover 53 and the footboard 27.

The rear cover 52 and the rear side cover 53 form a rear body 54 underneath the seat 26. The interior of the rear body 54 has an article storage compartment (not shown). A taillight 55 and a grab bar 56 are disposed in the rear part of the rear body 54.

### <Fuel Tank and Tank Guard>

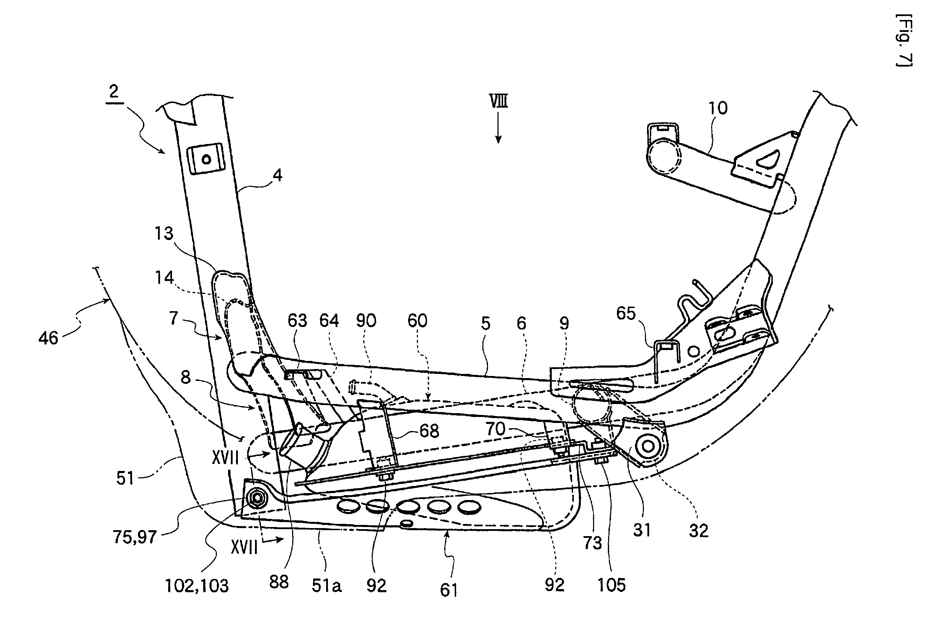

As illustrated in FIGS. 7 and 8, a fuel tank 60 is positioned between the left and right side frames 5, 6 while it is positioned below the footboard 27. A tank guard 61 is attached underneath the fuel tank 60. The bottom of the fuel tank 60 is positioned lower than the left and right side frames 5, 6 in a side view of the vehicle body.

Thus, disposition of the fuel tank 60 underneath the footboard 27 makes it possible to enlarge the capacity of the aforementioned article storage compartment compared to a case that the fuel tank 60 is disposed underneath the seat 26. Moreover, the barycentric position of the vehicle body can be lowered by mounting the heavy fuel tank 60 in a lower position of the vehicle body.

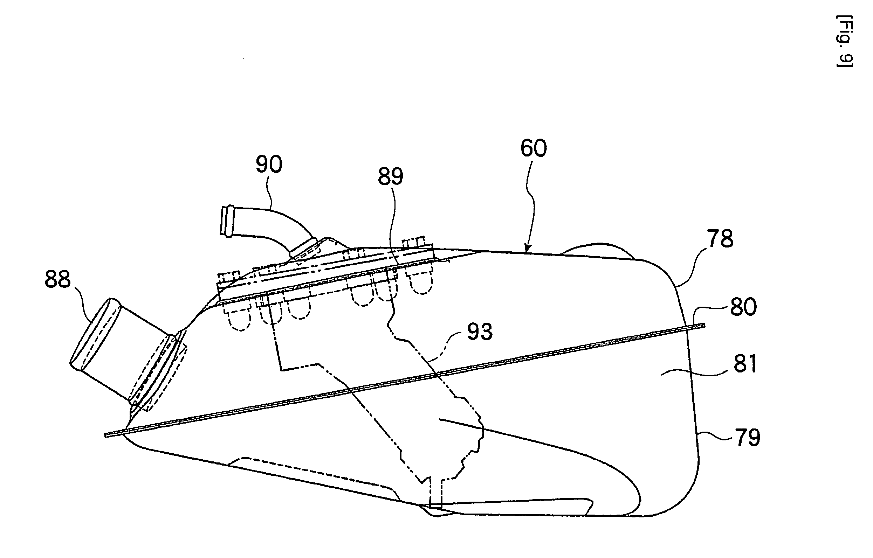

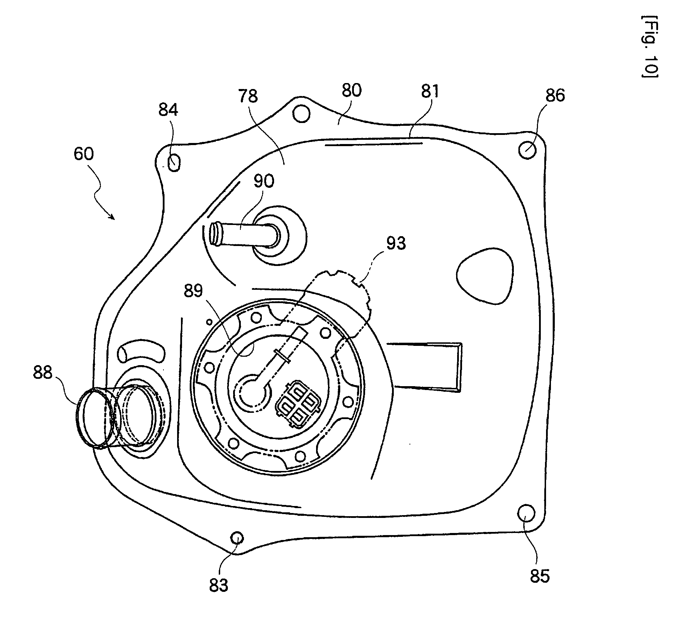

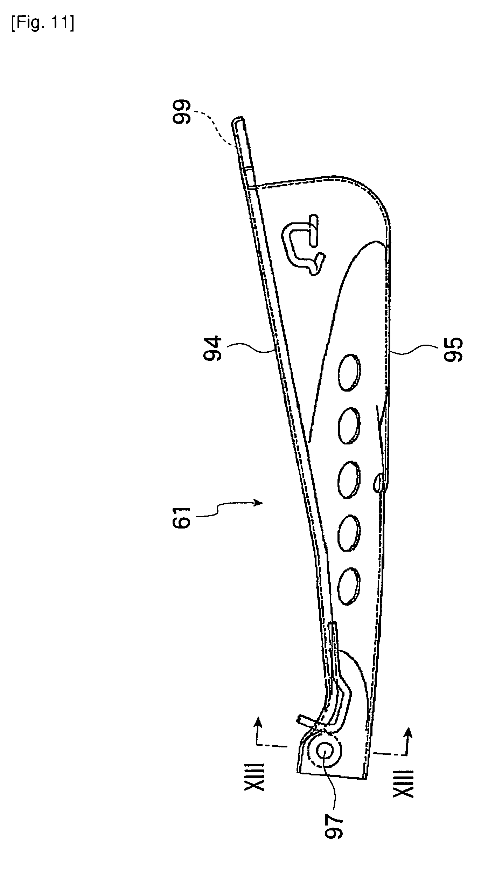

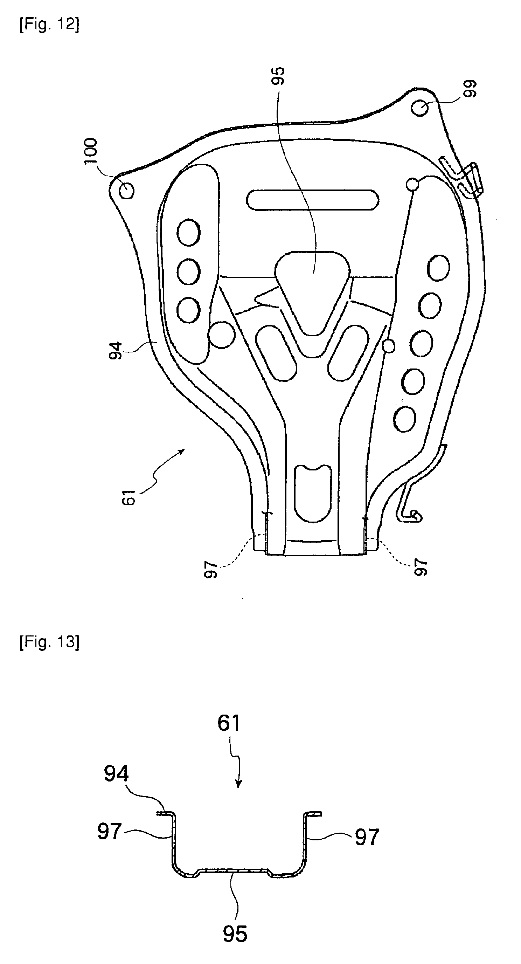

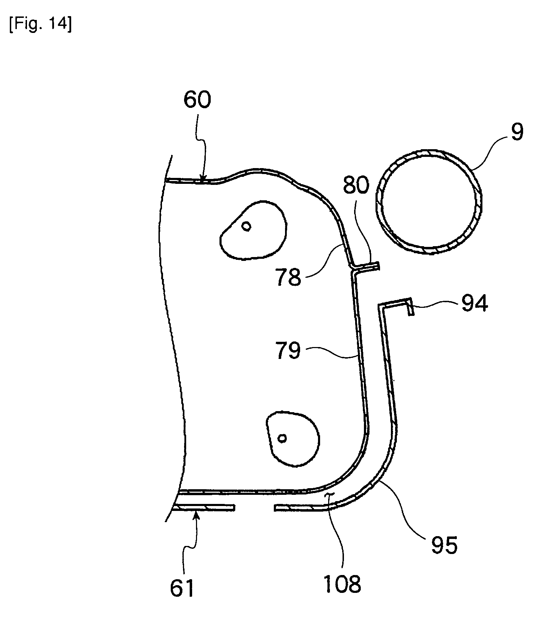

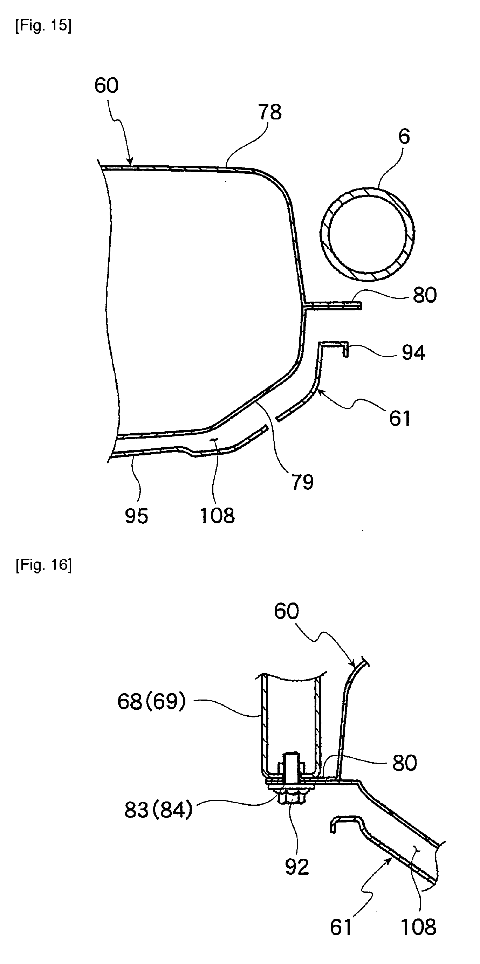

FIG. 9 is a left side view of the fuel tank 60, and FIG. 10 is a plan view of the fuel tank 60. FIG. 11 is a left side view of the tank guard 61, and FIG. 12 is a plan view of the tank guard 61. FIG. 13 is a longitudinal cross-sectional view of the tank guard 61 along a line XIII-XIII in FIG. 11. Furthermore, FIG. 14 is a longitudinal cross-sectional view of the fuel tank 60 and the tank guard 61 along a line XIV-XIV in FIG. 8. FIG. 15 is a longitudinal cross-sectional view of the fuel tank 60 and the tank guard 61 along a line XV-XV in FIG. 8. FIG. 16 is a longitudinal cross-sectional view of the fuel tank 60 and the tank guard 61 along a line XVI-XVI in FIG. 8. FIG. 17 is a longitudinal cross-sectional view of the fuel tank 60 and the tank guard 61 along a line XVII-XVII in FIG. 7. FIG. 18 is a longitudinal cross-sectional view of the fuel tank 60 and the tank guard 61 along a line XVIII-XVIII in FIG. 8.

The left and right side frames 5, 6 and the coupling member 9 are provided with: footboard fastening brackets 63, 64, 65, 66 to which the footboard 27 is fastened from above with bolts; tank fastening brackets 68, 69, 70, 71 as fuel tank fixing parts to which the fuel tank 60 is fastened; and guard fastening brackets 73, 74 to which the rear part of the tank guard 61 is fastened. A cylindrical guard fastening boss 75 is firmly fixed to the front frame 4 while it penetrates through the lower end of the front frame 4 in the transverse direction of the vehicle. Thus, the part for fixing the fuel tank 60 and the part for fixing the tank guard 61 are provided separately.

The fuel tank 60 is formed by joining a top half 78 and a bottom half 79 along a joining flange 80. Excluding the joining flange 80, the other part of the fuel tank 60 constitutes a box-shaped main body part 81. Frame attachment holes 83, 84, 85, 86 are formed in the joining flange 80. The top half 78 of the fuel tank 60 is provided with a connection tube 88, a fuel pump attachment opening 89, and a breather tube 90. The fuel tank 60 is composed of the main body part 81, the joining flange 80, the connection tube 88, the fuel pump attachment opening 89 and the breather tube 90.

Note fuel is supplied to the fuel tank 60 from a fuel filler opening 106 (see FIG. 3), provided in an approximately left center part of the leg shield cover 48, for instance. The fuel filler opening 106 and the connection tube 88 of the fuel tank 60 are connected through a fuel pipe (not shown) placed in a space between the front cover 47 and the leg shield cover 48.

The frame attachment holes 83, 84 of the joining flange 80 of the fuel tank 60 are disposed below the tank fastening brackets 68, 69. The tank fastening brackets 68, 69 are fastened to the fuel tank 60 with fixing bolts 92 from below. The frame attachment holes 85, 86 of the joining flange 80 are disposed on the top surfaces of the tank fastening brackets 70, 71. The tank fastening brackets 70, 71 are fastened to the fuel tank 60 with fixing bolts 92 from above. The fuel tank 60 can thus be fixed to the vehicle body frame 2. A fuel pump 93 is attached to the fuel pump attachment opening 89.

The tank guard 61 is provided underneath the fuel tank 60, and is fixed to the vehicle body frame 2. The tank guard 61 is a plate-shaped member made by press-forming a metal plate. Rigidity of the tank guard 61 is less than that of the vehicle body frame 2. As is evident from FIG. 7, the front end of the tank guard 61 is extended further forward than that of the fuel tank 60. The front end part of the tank guard 61 is fixed to the lower end part of the front frame 4. Therefore, the lower part of the front frame 4 is positioned further forward than the front end part of the fuel tank 60. As is evident from FIGS. 11, 12, 13 and other figures, the tank guard 61 is composed of a flange pant 94 and a guard part 95. The flange part 94 forms the periphery of the tank guard 61. The guard part 95 is positioned inside the flange part 94. The external edge of the flange part 94 is folded downward for greater bending rigidity. The guard part 95 is curved and bulged downward. The guard part 95 covers the bottom of the fuel tank 60. Diameter of the guard part 95 is formed slightly larger than that of the bottom of the fuel tank 60.

More specifically, the guard part 95 is formed in a closed-bottom box shape, which is made deeper toward the rear. The guard part 95 has a portion opposed to the left and right side parts of the lower part of the fuel tank 60, and a portion opposed to the rear side part of the fuel tank 60. The guard part 95 covers substantially the entire periphery of the lower part of the fuel tank 60. A transversely-penetrating front fixing aperture 97 is formed in each of the left and right side surfaces of the front part of the guard part 95. Vertically-penetrating rear fixing apertures 99, 100 are formed in the rear part of the flange part 94.

As shown in FIG. 17, the front part of the tank guard 61 includes a part 61a and parts 61b. The part 61a is positioned below the front frame 4, whereas the parts 61b are positioned lateral to the front frame 4. The front fixing aperture 97 is formed in each of the parts 61b positioned lateral to the front frame 4. Moreover a through bolt 102 penetrates through the front fixing apertures 97 and the guard fastening boss 75, and a nut 103 is fastened onto the through bolt 102. The front part of the tank guard 61 is thereby fixed to the lower end part of the front frame 4. In other words, the guard fastening boss 75, the front fixing aperture 97, the through bolt 102 and the nut 103 constitute front frame fixing means for fixing the tank guard 61 below the lower end part of the front frame 4. Here, the portion 61a of the front part of the tank guard 61, positioned below the front frame 4, and the lower end of the front frame 4 are disposed at a distance from each other in the vertical direction. A clearance 104 of at least several millimeters is formed between the front frame 4 and the portion 61a of the front of the tank guard 61, disposed below the front frame 4.

The portions of the tank guard 61, including the rear fixing apertures 99, 100, are disposed below the guard fastening brackets 73, 74, and are fastened to the guard fastening brackets 73, 74 with fixing bolts 105, as shown in FIG. 18. The rear part of the tank guard 61 is thereby fixed to the left and right side frames 5, 6. The tank guard 61 covers not only the fuel tank 60 but also the lower end part of the front frame 4.

The aforementioned tank guard 61 functions as a member for protecting the fuel tank 60 from the external force, particularly from the external force applied from below. The tank guard 61 is designed to have lower strength against the external force than does the vehicle body frame 2. The tank guard 61, together with the front frame 4, functions as a shock-absorbing mechanism for absorbing the external force acting on the vehicle body frame 2.

For example, as illustrated in FIGS 17 and 18, thickness of the tank guard 61 is formed to be less than that of the guard fastening boss 75 and the guard fastening brackets 73, 74. Additionally, the tank guard 61 is made of a type of material (e.g., aluminum) having lower strength than a type of material (e.g., iron) of the guard fastening boss 75 and guard fastening brackets 73, 74. The strength of the tank guard 61 is thereby designed to be lower than that of the vehicle body frame 2, the guard fastening boss 75 which is an attachment part of the vehicle body frame 2, and the guard fastening brackets 73, 74.

As illustrated in FIG. 7 and FIGS. 14 through 16, the fuel tank 60 and the tank guard 61 are disposed at a distance from each other in the vertical direction. A clearance 108 of at least several millimeters is formed between the fuel tank 60 and the tank guard 61. With the structure, the external force does not act on the fuel tank 60 even if the tank guard 61 is deformed somewhat by the external force. In particular, a larger clearance is formed between the tank guard 61 and the fuel tank 60 in comparison with a clearance formed between other parts. As illustrated in FIGS. 14 through 16, the flange part 94 of the tank guard 61 and the fuel tank 60 are disposed at a distance in the transverse direction.

As illustrated in FIGS 7 and 17, one of the cover members (e.g., the under cover 51), covering the vehicle body frame 2, covers the bottom side and the right and left sides of the coupling part between the front of the tank guard 61 and the lower end of the front frame 4. In other words, a bottom surface 51a of the under cover 51 is positioned below the lower end part of the front frame 4. The bottom surface 51a covers the bottom side and the lateral sides of the front end part of the tank guard 61. The middle part and the rear end part of the tank guard 61 are exposed to the exterior. The bottom surface 51a of the under cover 51 and the tank guard 61 are disposed at a distance from each other in the vertical direction. A clearance 110 of at least several millimeters is formed therebetween. Moreover, resin (not shown) is attached to the under cover 51. The resin is disposed between the under cover 51 and the vehicle body frame 2. The under cover 51 and the vehicle body frame 2 are thus prevented from coming into direct contact with each other.

In the present embodiment, the shock-absorbing mechanism is achieved by providing the tank guard 61 and setting rigidity of the tank guard 61 to be lower than that of the frame.

In the present embodiment, the tank guard 61 firstly makes contact with a bump on the road (e.g., a speed bump). When the external force acts on the tank guard 61, the tank guard 61 is elastically deformed and the external force is accordingly absorbed to some extent.

When the external force remains without being absorbed by the elastic deformation of the tank guard 61, the tank guard 61 is plastically deformed and the remaining external force is accordingly absorbed to some extent.

As a result, the finally-remaining external force, without being absorbed by the elastic deformation and the plastic deformation of the tank guard 61, is transferred to the front frame 4. However, the large amount of the external force is absorbed by the shock-absorbing mechanism. Therefore, vibration of the vehicle body is greatly inhibited.

A shock is thus buffered.

In the present embodiment, the shock-absorbing mechanism is configured to buffer a shock to be transferred to the front frame 4 by absorbing the external shock as described above.

### <Features>

(1) The shock-absorbing mechanism is configured to buffer the external force, acting on the vehicle body frame 2 composed of the front frame 4 and the tank guard 61, and is provided by: disposing the lower part of the front frame 4 forward of the main body part 81 of the fuel tank 60; and disposing a part of the tank guard 61 forward of the main body of the fuel tank 60 and below at least a part of the lower end of the front frame 4. The tank guard 61 firstly makes contact with a bump on the road (e.g., a speed bump). Even if the external force is applied to the tank guard 61 at this time, the external force is absorbed by the shock-absorbing mechanism to some extent. Accordingly, the amount of the external force to be transferred to the front frame 4 is reduced, and vibration of the vehicle is inhibited. Even if the large external force is applied, the external force is partially absorbed by the shock-absorbing mechanism. Subsequently, the external force, remaining without being absorbed by the shock-absorbing mechanism, is transferred to the front frame 4. However, the large amount of the external force is absorbed by the shock-absorbing mechanism. Therefore, vibration of the vehicle is greatly inhibited. It is obviously possible to protect the fuel tank 60. As a result, it is possible to enlarge the capacity of the fuel tank 60 and protect the fuel tank 60. Furthermore, vibration of the vehicle is reduced, and it is accordingly possible to inhibit reduction in comfortableness of a rider.

The fuel tank 60 is herein allowed to be enlarged downward. Therefore, the fuel tank 60 is not required to be enlarged upward. In other words, height of the footboard 27 is not required to be increased. It is accordingly possible to inhibit reduction in comfortableness of a rider.

The fuel tank 60 is disposed below the footboard 27 not below the seat 26. Accordingly, it is possible to ensure a large article storage compartment to be formed in the space underneath the seat 26.

(2) The tank guard 61 is configured to have lower strength against the external force applied from the exterior than the vehicle body frame 2 and the attachment parts of the tank guard 61, including the guard fastening brackets 73, 74 and the guard fastening boss 75. Therefore, when the external force acts on the tank guard 61, the tank guard 61 is elastically deformed, and the external force is absorbed to some extent.

When the external force remains to be absorbed by the elastic deformation of the tank guard 61, the tank guard 61 is plastically deformed. Accordingly, the remaining external force is absorbed to some extent.

Finally, the external force, remaining without being absorbed by the elastic deformation and the plastic deformation of the tank guard 61, is transferred to the front frame 4. However, the large amount of the external force is absorbed by the shock-absorbing mechanism. Therefore, vibration of the vehicle is greatly inhibited.

It is thus possible to buffer a shock.

Consequently, it is possible to inhibit influence on the guard fastening brackets 73, 74 and the guard fastening boss 75, which are provided on the vehicle body frame 2. Therefore, it is possible to protect the fuel tank 60 and inhibit transference of the external force to the vehicle body frame 2 while a rider is allowed to more comfortably ride on the vehicle.

(3) The front part of the tank guard 61 is positioned below the lower end of the front frame 4 hanging down to a relatively lower position in the vehicle body, and is fixed to the lower end part of the front frame 4. Therefore, when the external force is applied from below, the tank guard 61 buffers the external force. It is thus possible to inhibit the external force from being transferred to the front frame 4.

Particularly in the fixing part between the tank guard 61 and the lower end part of the front frame 4, the tank guard 61 and the lower end part of the front frame 4 are disposed at a distance from each other. Accordingly, the clearance 104 is formed between the two parts. Therefore, even if the tank guard 61 is deformed by the external force applied from below, it is possible to inhibit influence of the external force on the front frame 4.

(4) The under cover 51, which is one of the cover members for covering the vehicle body frame 2, covers the front part of the tank guard 61 from below. Therefore, the tank guard 61 and the components for fixing the front part of the tank guard 61 to the lower end part of the front frame 4 (i.e., the guard fastening boss 75, the front fixing aperture 97, the through bolt 102 and the nut 103) are concealed from the exterior. Therefore, the external appearance can be markedly improved. Moreover, deformation of the tank guard 61 can be inhibited by the under cover 51 when the small amount of the external force is applied from below.

(5) The bottom surface 51a of the under cover 51 and the tank guard 61 are disposed at a distance from each other. Additionally, the clearance 110 is formed between the two parts. The bottom surface 51a is therefore provided with a cushioning ability. Accordingly, the impact and harsh noises, produced when the external force acts from below, are alleviated, and damage to the bottom surface 51a itself can be inhibited.

(6) The under cover 51 (bottom surface 51a) covers only the bottom side and the lateral sides of the front end part of the tank guard 61. The minimum ground clearance of the vehicle body can be sufficiently ensured in an intermediate part between the front wheel 18 and rear wheel 37, especially a part underneath the footboard 27. At the same time, enlargement of the transverse length of the under cover 51 can be prevented, and a large bank angle is ensured when the vehicle travels on the curvy road. Moreover, it is possible to inhibit disturbance against easy maintenance of the fuel tank 60 and its periphery.

(7) The vehicle body frame 2 is provided with the following separate components: the tank fastening brackets 68, 69, 70, 71 as the fuel tank fixing parts for fastening the fuel tank 60; and the guard fastening brackets 73, 74 and the guard fastening boss 75 for fixing the tank guard 61. Therefore, even if the external force acts on the tank guard 61 during driving of the scooter type vehicle 1, influence of the external force on the fuel tank 60 can be reduced.

(8) The tank guard 61 has a shape extending from below the front frame 4 to behind the fuel tank 60. Therefore, the entire fuel tank 60 can be effectively protected in the longitudinal direction.

(9) The left and right sides of the fuel tank 60 are also covered with the tank guard 61. Therefore, protection of the fuel tank 60 can be effectively enhanced. With the structure, the fuel tank 60 is concealed from the exterior. It is thereby possible to improve the outward appearance of the scooter type vehicle 1.

### <Other Embodiments>

(a) The present invention is not limited to the aforementioned embodiment. For example, the positions, quantities, shapes, and other features of the front fixing aperture 97 and the rear fixing apertures 99, 100 as the attachment parts of the tank guard 61 can be arbitrarily changed in terms of their design.

(b) In the aforementioned embodiment, the shock-absorbing mechanism is achieved by providing the tank guard 61 and setting the rigidity of the tank guard 61 to be lower than that of the frame. However, a variety of structures may be used for the shock-absorbing mechanism. For example, the shock-absorbing mechanism is achieved by the following structure. As illustrated in FIG. 19, an elongated aperture 61d, extended along a direction that the external force acts, is formed in the portion 61b of the front part of the tank guard 61, positioned lateral to the front frame 4. The tank guard 61 is fixed to the lower end part of the front frame 4 with the guard fastening boss 75 and the through bolt 102 penetrating the elongated aperture 61d. The elongated aperture 61d is extended in an upwardly rearward direction. The through bolt 102 is extended in the transverse direction of the vehicle. In the embodiment, the guard fastening boss 75, the elongated aperture 61d, the through bolt 102 and the nut 103 compose fixing means for fixing the tank guard 61 below the lower end part of the front frame 4.

In this case, the tank guard 61 firstly makes contact with a bump on the road (e.g., a speed bump). When the external force acts on the tank guard 61, the tank guard 61 is elastically deformed. Accordingly, the external force is absorbed to some extent.

If the external force remains to be absorbed by the elastic deformation of the tank guard 61, the tank guard 61 will move by the distance equal to the length of the elongated aperture 61d. When the tank guard 61 moves with respect to the front frame 4, the frictional force is generated between the tank guard 61 ad the front frame 4. Accordingly, the external force is absorbed as the thermal energy to some extent. Additionally, the external force is absorbed as the energy for moving the tank guard 61 to some extent. As a result, when the tank guard 61 is moved at the distance equal to the length of the elongated aperture 61d, the external force is absorbed to some extent.

When the external force remains to be absorbed as the result of the elastic deformation and the movement of the tank guard 61, the tank guard 61 is plastically deformed and the external force is thereby absorbed to some extent.

The external force, remaining to be absorbed as the result of the elastic deformation, the movement and the plastic deformation of the tank guard 61, is transferred to the front frame 4. However, the large amount of the external force is absorbed by the shock-absorbing mechanism. Therefore, vibration of the vehicle is greatly inhibited.

It is thus possible to buffer a shock.

The shock-absorbing mechanism is configured to buffer a shock to be transferred to the front frame 4 by absorbing the external force as described above.

When the external force is absorbed by the elastic deformation and the movement of the tank guard 61 without the plastic deformation of the tank guard 61, effect of the shock-absorbing mechanism is allowed to be maintained by moving the tank guard 61 to its original position.

(c) In the present embodiment, the front fixing aperture 97 formed in the front part of the tank guard 61, the guard fastening boss 75 formed in the lower end of the front frame 4, the through bolt 102 and the nut 103 are used for fixing the front part of the tank guard 61 to the lower end of the front frame 4. However, the front part of the tank guard 61 may be directly fixed to the lower end of the front frame 4 with a bolt without the guard fastening boss 75, for instance. Alternatively, a bushing or another member may be interposed between the front frame 4 and the tank guard 61.

(d) The tank guard 61 may not be necessarily fixed to the lower end part of the front frame 4. For example, the following structure may be used. Fixing parts may be provided to the front parts of the left and right side frames 5, 6, and the approximately front part of the tank guard 61 may be supported by the fixing parts. Moreover, the front end part of the tank guard 61 may be extended below the lower end of the front frame 4. In short, regardless of the structure for fixing the tank guard 61, any configuration may be used as long as: the front part of the tank guard 61 is fixed in a position below the lower end of the front frame 4; and the lower end of the front frame 4 is protected while it is covered from below with the front part of the tank guard 61.

(e) The structure for fixing the tank guard 61 is not limited to the structure using bolts. For example, the structure may be achieved using any suitable methods e.g., welding, fitting and integral molding. Also, the shape of the tank guard 61 is not limited to a plate shape. The tank guard 61 may be formed in any suitable shapes, e.g., a grill shape and a net shape.

(f) The distance between the tank guard 61 and the front frame 4, or the distance between the tank guard 61 and the fuel tank 60 may be arbitrarily set, and the strength (rigidity) of the tank guard 61 may also be arbitrarily set. Even with these modifications, the aforementioned advantageous effects can still be similarly achieved.

(g) The structure for connecting the front frame 4 and the left and right side frames 5, 6 of the vehicle body frame 2 is not limited to that of the aforementioned embodiment. For example, the left and right side frames 5, 6 may be disposed in the same height. Alternatively, the vertical positions of the left and right side frames 5, 6 may be reversed in the aforementioned embodiment.

(h) The shape of the vehicle body frame 2 is not limited to the aforementioned embodiment. For example, the lower part of the front frame may be curved to the rearward in a side view.

(i) In the aforementioned embodiment, the vehicle body frame is composed of separately formed members, and the members are connected by welding. However, the present invention is not limited to this. For example, the members may be integrally formed by molding.

(j) In the aforementioned embodiment, the footboard 27 is formed in a roughly flat shape. Moreover, the footboard may be composed of a plurality of members.

(k) The structure of the vehicle body cover is not limited to the aforementioned embodiment. For example, the vehicle cover may be composed of different members.

(1) In the aforementioned embodiment, the front frame 4 is extended downward. The front frame 4, which is "extended downward," herein includes a type of frame perpendicular to the ground and a type of frame extending in a downwardly rearward direction. Moreover, the front frame 4 "extended downward" includes a type of frame, which is extended downward or rearward in the longitudinal direction of the vehicle and is inclined in the transverse direction of the vehicle.

(m) The shape of the tank guard 61 is not limited to one described in the aforementioned embodiment. Additionally, the position of the tank guard 61 is not particularly limited as long as the tank guard 61 is at least positioned below a part of the lower end of the front frame 4 and below a part of the fuel tank 60. Therefore, the tank guard 61 may be positioned below a part of the lower end of the front frame 4 and below a part of the fuel tank 60, or alternatively positioned below the entire lower end of the front frame 4 and below a part of the fuel tank 60. Alternatively, the tank guard 61 may be positioned below a part of the lower end of the front frame 4 and below the entire fuel tank 60. Yet alternatively, the tank guard 61 may be positioned below the entire lower end of the front frame 4 and below the entire fuel tank 60.

### Reference Signs List

- 1: Scooter type vehicle
- 2: Vehicle body frame
- 3: Head pipe
- 4: Front frame
- 5: Left side frame
- 6: Right side frame
- 7: left joining part
- 8: right joining part
- 19: Front fork
- 20: Handle
- 26: Seat
- 27: Footboard
- 34: Power unit
- 51: Under cover
- 60: Fuel tank
- 61: Tank guard
61a Tank guard portion
61d elongated aperture
- 68, 69, 70, 71: Tank fastening brackets
- 73,: 74 Guard fastening brackets
- 75: Guard fastening boss
- 97: Front fixing aperture
- 102: Through bolt
- 103: Nut 104 Clearance

## Claims

1. A scooter type vehicle, (1) comprising:
a handle (20);
a vehicle body frame (2), including:
a head pipe (3) supporting the handle (20) through a front fork (19) for allowing the handle (20) to rotate;
a front frame (4) at least extending downward from the head pipe (3); and
left and right side frames (5, 6), each having a portion extending to the rearward from a lower part of the front frame (4) and a portion extending in an upwardly rearward direction;
a seat (26) disposed above the side frames (5, 6), the seat (26) disposed rearward of the handle (20):
a Roughly flat footboard (27) disposed above the side frames (5, 6), the footboard (27) allowing a rider straddling the seat (26) to put his/her feet;
a fuel tank (60) disposed below the footboard (27), the bottom surface of the fuel tank (60) positioned lower than the left and right side frames (5, 6) in a side view of the vehicle; and
a tank guard (61) disposed below at least a part of the fuel tank (60),
wherein a front end part of the tank guard (61) is fixed to the lateral sides of a lower end part of the front frame (4),
wherein the lower part of the front frame (4) is disposed forward of a main body part of the fuel tank (60),
wherein the tank guard (61) is partially disposed forward of the main body part of the fuel tank (60) and below at least a part of the lower end part of the front frame (4),
wherein the front frame (4) and the tank guard (61) compose a shock-absorbing mechanism for absorbing the external force acting on the vehicle body frame (2), and
wherein the tank guard (61) is fixed at the position of a guard fastening boss (75) on the lower part of the front frame (4) which is lower than the position of left and right joining parts (7, 8) at which the left and right side frames (5, 6) are fixed to the lower part of the front frame (4).

2. The scooter type vehicle according to claim 1, wherein the shock-absorbing mechanism is designed to have lower strength against the external force than the vehicle body frame (2).

3. The scooter type vehicle according to claims 1 or 2, wherein the tank guard (61) functions as the shock-absorbing mechanism when plastic deformation is caused in the tank guard (61).

4. The scooter type vehicle according to claim 1, further comprising fixing means (61d,75,102,103) for fixing the tank guard (61) to the front frame (4), the fixing means having an elongated aperature (61d),
wherein the tank guard (61) having the elongated aperture (61d) in a part thereof positioned lateral to the front frame (4), and
wherein the tank guard (61) functions as the shock-absorbing mechanism when the tank guard (61) moves along the elongated aperture (61d).

5. The scooter type vehicle according to claim 1, wherein the front end part of the tank guard (61) includes a bottom part (61a) positioned below the lower end part of the front frame (4), and left and right lateral side parts (61 b) positioned on the left and right lateral sides of the lower end part of the front frame (4),
wherein a clearance (104) of at least second millimeters is formed between the bottom part (61a) and the lower end part of the front frame (4).

6. The scooter type vehicle according to any one of claims 1 to 5, further comprising a cover member (51) for covering the vehicle body frame (2), the cover member covering the tank guard (61) from below.

7. The scooter type vehicle according to any one of claims 1 to 6, further comprising:
a fuel tank fixing part (68-71) for fixing the fuel tank (60), the fuel tank fixing part provided to the vehicle body frame (2); and
a tank guard fixing part (73,74) for fixing the tank guard (61), the tank guard fixing part provided to the vehicle body frame separately from the fuel tank fixing part.

8. The scooter type vehicle according to any one of claims 1 to 7, wherein the tank guard (61) extends from underneath the front frame (4) toward the back of the fuel tank (60).

9. The scooter type vehicle according to any one of claims 1 to 8, wherein the tank guard (61) covers the left and right sides of the fuel tank (60).

10. The scooter type vehicle according to any one of claims 1 to 9, wherein vertical distance between the tank guard (61) and a rear part of the fuel tank (60) is set to be less than vertical distance between the tank guard (61) and a front part of the fuel tank (60).

## Patentansprüche

1. Ein Fahrzeug vom Rollertyp (1), das folgende Merkmale aufweist:
einen Griff (20);
einen Fahrzeugkörperrahmen (2), der folgende Merkmale umfasst:
ein Kopfrohr (3), das den Griff (20) durch eine Vorderradgabel (19) trägt, um ein Drehen des Griffs (20) zu ermöglichen;
einen Vorderrahmen (4), der sich von dem Kopfrohr (3) aus zumindest nach unten erstreckt; und
einen linken und einen rechten Rahmen (5, 6), von denen jeder einen Abschnitt, der sich von einem unteren Teil des Vorderrahmens (4) nach hinten erstreckt, und einen Abschnitt, der sich in einer nach oben gerichteten Rückwärtsrichtung erstreckt, aufweist;
einen oberhalb der Seitenrahmen (5, 6) angeordneten Sitz (26), wobei der Sitz (26) weiter hinten als der Griff (20) angeordnet ist;
ein annähernd flaches Trittbrett (27), das oberhalb der Seitenrahmen (5, 6) angeordnet ist, wobei das Trittbrett (27) es einem rittlings auf dem Sitz (26) sitzenden Fahrer ermöglicht, seine Füße daraufzustellen;
einen unterhalb des Trittbretts (27) angeordneten Treibstofftank (60), wobei die untere Oberfläche des Treibstofftanks (60) in einer Seitenansicht des Fahrzeugs niedriger positioniert ist als der linke und der rechte Seitenrahmen (5, 6); und
ein Tankschutzvorrichtung (61), die unterhalb zumindest eines Teils des Treibstofftanks (60) angeordnet ist,
wobei ein vorderes Endteil der Tankschutzvorrichtung (61) an den lateralen Seiten eines unteren Endteils des Vorderrahmens (4) befestigt ist,
wobei der untere Teil des Vorderrahmens (4) weiter vorne als ein Hauptkörperteil des Treibstofftanks (60) angeordnet ist,
wobei die Tankschutzvorrichtung (61) teilweise weiter vorne als der Hauptkörperteil des Treibstofftanks (60) und unterhalb zumindest eines Teils des unteren Endteils des Vorderrahmens (4) angeordnet ist,
wobei der Vorderrahmen (4) und die Tankschutzvorrichtung (61) einen Stoßdämpfungsmechanismus zum Absorbieren der auf den Fahrzeugkörperrahmen (2) einwirkenden äußeren Kraft bilden, und
wobei die Tankschutzvorrichtung (61) an der Position eines Schutzvorrichtungsanbringvorsprungs (75) an dem unteren Teil des Vorderrahmens (4) befestigt ist, die niedriger ist als die Position des linken und des rechten Verbindungsteils (7, 8), an denen der linke und der rechte Seitenrahmen (5, 6) an dem unteren Teil des Vorderrahmens (4) befestigt sind.

2. Das Fahrzeug vom Rollertyp gemäß Anspruch 1, bei dem der Stoßdämpfungsmechanismus dahin gehend entworfen ist, gegenüber der äußeren Kraft eine geringere Festigkeit aufzuweisen als der Fahrzeugkörperrahmen (2).

3. Das Fahrzeug vom Rollertyp gemäß Anspruch 1 oder 2, bei dem die Tankschutzvorrichtung (61) als der Stoßdämpfungsmechanismus fungiert, wenn bei der Tankschutzvorrichtung (61) eine plastische Verformung bewirkt wird.

4. Das Fahrzeug vom Rollertyp gemäß Anspruch 1, das ferner eine Befestigungseinrichtung (61d, 75, 102, 103) zum Befestigen der Tankschutzvorrichtung (61) an dem Vorderrahmen (4) aufweist, wobei die Befestigungseinrichtung eine längliche Apertur (6 1 d) aufweist,
wobei die Tankschutzvorrichtung (61) die längliche Apertur (61d) in einem Teil derselben aufweist, der lateral zu dem Vorderrahmen (4) positioniert ist, und
wobei die Tankschutzvorrichtung (61) als der Schalldämpfungsmechanismus fungiert, wenn sich die Tankschutzvorrichtung (61) entlang der länglichen Apertur (61d) bewegt.

5. Das Fahrzeug vom Rollertyp gemäß Anspruch 1, bei dem das vordere Endteil der Tankschutzvorrichtung (61) einen Bodenteil (61 a), der unterhalb des unteren Endteils des Vorderrahmens (4) positioniert ist, und einen linken und einen rechten lateralen Seitenteil (61b), die auf der linken und der rechten lateralen Seite des unteren Endteils des Vorderrahmens (4) positioniert sind, umfasst,
wobei zwischen dem Bodenteil (61 a) und dem unteren Endteil des Vorderrahmens (4) ein Zwischenraum (104) von zumindest mehreren Millimetern gebildet ist.

6. Das Fahrzeug vom Rollertyp gemäß einem der Ansprüche 1 bis 5, das ferner ein Abdeckbauglied (51) zum Abdecken des Fahrzeugkörperrahmens (2) aufweist, wobei das Abdeckbauglied die Tankschutzvorrichtung (61) von unten her abdeckt.

7. Das Fahrzeug vom Rollertyp gemäß einem der Ansprüche 1 bis 6, das ferner folgende Merkmale aufweist:
ein Treibstofftankbefestigungsteil (68-71) zum Befestigen des Treibstofftanks (60), wobei das Treibstofftankbefestigungsteil dem Fahrzeugkörperrahmen (2) bereitgestellt ist; und
ein Tankschutzvorrichtungsbefestigungsteil (73, 74) zum Befestigen der Tankschutzvorrichtung (61), wobei das Tankschutzvorrichtungsbefestigungsteil dem Fahrzeugkörperrahmen separat von dem Treibstofftankbefestigungsteil bereitgestellt ist.

8. Das Fahrzeug vom Rollertyp gemäß einem der Ansprüche 1 bis 7, bei dem sich die Tankschutzvorrichtung (61) von unterhalb des Vorderrahmens (4) zu dem rückwärtigen Ende des Treibstofftanks (60) hin erstreckt.

9. Das Fahrzeug vom Rollertyp gemäß einem der Ansprüche 1 bis 8, bei dem die Tankschutzvorrichtung (61) die linke und die rechte Seite des Treibstofftanks (60) abdeckt.

10. Das Fahrzeug vom Rollertyp gemäß einem der Ansprüche 1 bis 9, bei dem ein vertikaler Abstand zwischen der Tankschutzvorrichtung (61) und einem hinteren Teil des Treibstofftanks (60) so eingestellt ist, dass er geringer ist als ein vertikaler Abstand zwischen der Tankschutzvorrichtung (61) und einem vorderen Teil des Treibstofftanks (60).

## Revendications

1. Véhicule de type scooter (1), comprenant:
une poignée (20);
une ossature de carrosserie de véhicule (2), comportant:
un tube principal (3) supportant la poignée (20) par l'intermédiaire d'une fourche avant (19) pour permettre que la poignée (20) tourne;
une ossature avant (4) s'étendant au moins vers le bas depuis le tube principal (3); et
des ossatures latérales gauche et droite (5, 6) présentant, chacune, une partie s'étendant vers l'arrière à partir de l'ossature avant (4) et une partie s'étendant dans la direction vers l'arrière et vers le haut;
un siège (26) disposé au-dessus des ossatures latérales (5, 6), le siège (26) étant disposé en arrière de la poignée (20);
un marche-pied approximativement plan (27) disposé au-dessus des ossatures latérales (5, 6), le marche-pied (27) permettant à un conducteur d'enjamber le siège (26) pour placer les pieds;
un réservoir à carburant (60) disposé au-dessous du marche-pied (27), la surface inférieure du réservoir à carburant (60) étant positionnée plus basse que les ossatures latérales gauche et droite (5, 6) en vue de côté du véhicule; et
une plaque de protection de réservoir (61) disposée au-dessous d'au moins une partie du réservoir à carburant (60),
dans lequel une partie d'extrémité avant de la plaque de protection de réservoir (61) est fixée aux côtés latéraux d'une une partie d'extrémité inférieure de l'ossature avant (4),
dans lequel la partie inférieure de l'ossature avant (4) est disposée à l'avant d'un corps principal du réservoir à carburant (60),
dans lequel la plaque de protection de réservoir (61) est partiellement disposée en avant de la partie de corps principal du réservoir à carburant (60) et au-dessous d'au moins une partie de la partie d'extrémité inférieure de l'ossature avant (4),
dans lequel l'ossature avant (4) et la plaque de protection de réservoir (61) forment un mécanisme pare-chocs destiné à absorber la force externe agissant sur l'ossature de carrosserie de véhicule (2), et
dans lequel la plaque de protection de réservoir (61) est fixée à la position d'une bosse de fixation de plaque de protection (75) sur la partie inférieure de l'ossature avant (4) qui est inférieure à la position des pièces de jonction gauche et droite (7, 8) à laquelle les ossatures latérales gauche et droite (5, 6) sont fixées à la partie inférieure de l'ossature avant (4).

2. Véhicule de type scooter selon la revendication 1, dans lequel le mécanisme pare-chocs est conçu de manière à présenter une moindre résistance à la force externe que l'ossature de carrosserie de véhicule (2).

3. Véhicule de type scooter selon les revendications 1 ou 2, dans lequel la plaque de protection de réservoir (61) fonctionne comme mécanisme pare-chocs lorsqu'une déformation plastique est provoquée dans la plaque de protection de réservoir (61).

4. Véhicule de type scooter selon la revendication 1, comprenant par ailleurs des moyens de fixation (61d, 75, 102, 103) pour fixer la plaque de protection de réservoir (61) à l'ossature avant (4), les moyens de fixation présentant une ouverture oblongue (61d),
dans lequel la plaque de protection de réservoir (61) présente l'ouverture oblongue (61d) dans une partie de celle-ci positionnée latéralement par rapport à l'ossature avant (4), et
dans lequel la plaque de protection de réservoir (61) fonctionne comme mécanisme pare-chocs lorsque la plaque de protection de réservoir (61) se déplace le long de l'ouverture oblongue (61d).

5. Véhicule de type scooter selon la revendication 1, dans lequel la partie d'extrémité avant de la plaque de protection de réservoir (61) comporte une partie inférieure (61a) positionnée au-dessous de la partie d'extrémité inférieure de l'ossature avant (4), et les parties latérales gauche et droite (61b) sont positionnées sur les côtés latéraux gauche et droit de la partie d'extrémité inférieure de l'ossature avant (4),
dans lequel un interstice (104) d'au moins plusieurs millimètres est formé entre la partie inférieure (61a) et la partie d'extrémité inférieure de l'ossature avant (4).

6. Véhicule de type scooter selon l'une quelconque des revendications 1 à 5, comprenant par ailleurs un élément de couvercle (51) destiné à recouvrir l'ossature de carrosserie de véhicule (2), l'élément de couvercle recouvrant la plaque de protection de réservoir (61) du dessous.

7. Véhicule de type scooter selon l'une quelconque des revendications 1 à 6, comprenant par ailleurs:
une pièce de fixation de réservoir à carburant (68 à 71) destinée à fixer le réservoir à carburant (60), la pièce de fixation de réservoir à carburant étant prévue sur l'ossature de carrosserie de véhicule (2); et
une pièce de fixation de plaque de protection de réservoir (73, 74) destinée à fixer la plaque de protection de réservoir (61), la pièce de fixation de plaque de protection de réservoir étant prévue sur l'ossature de carrosserie de véhicule séparément de la pièce de fixation de réservoir à carburant.

8. Véhicule de type scooter selon l'une quelconque des revendications 1 à 7, dans lequel la plaque de protection de réservoir (61) s'étend de sous l'ossature avant (4) vers l'arrière du réservoir à carburant (60).

9. Véhicule de type scooter selon l'une quelconque des revendications 1 à 8, dans lequel la plaque de protection de réservoir (61) recouvre les côtés gauche et droit du réservoir à carburant (60).

10. Véhicule de type scooter selon l'une quelconque des revendications 1 à 9, dans lequel la distance verticale entre la plaque de protection de réservoir (61) et la partie arrière du réservoir à carburant (60) est réglée de manière à être inférieure à la distance verticale entre la plaque de protection de réservoir (61) et une partie avant du réservoir à carburant (60).
